# EUROPÄISCHE PATENTSCHRIFT

(11) **EP 0 853 039 B1**
(45) Veröffentlichungstag und Bekanntmachung des Hinweises auf die Patenterteilung: **23.04.2003**
(21) Anmeldenummer: 97122223.7
(22) Anmeldetag: 17.12.1997
(51) Int. Cl.: B64C 1/20, B64D 9/00, B60P 7/13, B60P 7/08

(54) **Vorrichtung zum Transport und Befestigen von Frachtcontainern oder Sitzpaletten in einem Flugzeug**
Device for moving and locking containers or seat-pallets inside an aircraft
Dispositif pour déplacer et fixer des conteneurs et des palettes avec sièges dans un avion

(30) Priorität: 10.01.1997 DE 19700543
(43) Veröffentlichungstag der Anmeldung: 15.07.1998
(73) Patentinhaber: Airbus Deutschland GmbH, 21129 Hamburg (DE)
(72) Erfinder: Kook, Manfred, 21109 Hamburg (DE); Schopenhauer, Wolfram, 21149 Hamburg (DE)
(74) Vertreter: Hansmann, Dierk, Dipl.-Ing.

(56) Entgegenhaltungen:
- EP-A- 0 507 257
- US-A- 3 381 921
- US-A- 3 480 239
- US-A- 4 234 278
- US-A- 5 383 630
- "Design in Action: Quick-Change Jet Palletizes" MACHINE DESIGN, Bd. 38, Nr. 7, 17. März 1966 (1966-03-17), Seite 40 XP002109352

## Beschreibung

Die Erfindung betrifft eine Vorrichtung zum Transport und zur Befestigung von im Einsatz befindlichen LD-Frachtcontainer-Systemen oder von vorzugsweise mit Sitzen ausgerüsteten Paletten (Sitzpaletten) auf den Querträgern eines Fußbodenrostes in einem Flugzeug mit im Bodenbereich des Flugzeuges befestigbaren Verriegelungselementen, Transportrollen bzw. Kugelelementen, mit U-förmigen Längsprofilen zur Aufnahme der Verriegelungselemente, Transportrollen bzw. Kugelelemente, wobei die U-förmigen Längsprofile auf den Querträgern des Fußbodenrostes in vorgegebenen Abständen zueinander befestigbar sind, und mit innerhalb der U-förmigen Längsprofile befestigten Transportrollen bzw. Kugelelementen, die aus den U-förmigen Längsprofilen herausragen und die in durch die LD-Frachtcontainer-Systeme bzw. Sitzpaletten bestimmten Abständen in Längsrichtung der Längsprofile angeordnet sind.

Zum Transport und zur Befestigung von Frachtcontainern oder von beispielsweise mit Sitzen ausgerüsteten Paletten in einem Flugzeug ist es bekannt, auf dem vorhandenen Fußbodenrost des Flugzeuges ein Frachtladesystem zu montieren. Auf diesem Frachtladesystem werden die Container oder Paletten auf Tranportrollen transportiert und mittels vorhandener Verriegelungselemente im Flugzeug befestigt. Hierbei ist neben eines erheblichen Mehrgewichtes auch von Nachteil, daß ein Verlust an Kabinenhöhe von etwa 3 Zoll vorliegt, was für die Passagiere weniger Komport bedeutet.

Eine Vorrichtung zum Transport und zur Befestigung von Frachtcontainern oder Fracht-Plattformen auf den Querträgern eines Fußbodenrostes in einem Flugzeug unter Verwendung von im Bodenbereich der Container oder Plattformen befestigten Verriegelungselementen und Transportrollen ist aus der CH-PS 349 493 bekannt. Auf den Querträgern des Fußbodenrostes sind in vorgegebenen Abständen, die sich durch die an den Containern oder Plattformen befestigten Verriegelungselemente und Transportrollen ergeben, U-förmige Längsprofile befestigt. Auf den Innenflächen der Verbindungsstege der Längsprofile rollen die Transportrollen bei einem Transport der Container oder Plattformen ab. Von Nachteil ist, daß jeder Container bzw. jede Plattform mit eigenen Transportrollen an ihren Unterseiten ausgerüstet sein muß.

In der US-PS 2,625,118 ist eine Vorrichtung zur Befestigung von Frachtcontainern auf Querträgern eines Fußbodenrostes .in einem Flugzeug beschrieben. Bei dieser Vorrichtung sind an den Querträgern befestigte Schienenelemente vorgesehen, die mit den Verriegelungselementen und Transportrollen der Frachtcontainer zusammenwirken. Nachteiligerweise ragen die Schienen aus nahezu U-förmigen Nuten von die Fußbodenebene im Flugzeug bildenden Längsprofilen heraus, sodaß die Transportrollen der Frachtcontainer im wesentlichem Maße oberhalb der Fußbodenebene abrollen. Somit ist eine in Z-Richtung des Flugzeuges platzsparende Anordnung nicht möglich.

Eine Vorrichtung zum Transport und zur Befestigung von im Einsatz befindlichen Frachtcontainer-Systemen oder vorzugsweise mit Sitzen ausgerüsteten Paletten auf den Querträgern eines Fußbodenrostes in einem Flugzeug der eingangs beschriebenen Art ist aus der US-PS 4,234,278 bekannt. Bei dieser Vorrichtung sind Verriegelungselemente und Transportrollen in U-förmigen Längsprofilen angeordnet, die parallel zueinander auf dem Fußboden eines Flugzeugfrachtraumes befestigt sind. Bei den Verriegelungselementen handelt es sich jeweils um zwei zusammenwirkende Hakenelemente, die sich im Ruhezustand innerhalb der U-förmigen Längsprofile befinden und somit von den Frachtcontainer-Systemen bzw. Sitzpaletten überrollbar sind. Im Befestigungszustand ragen die Verriegelungselemente aus den U-förmigen Längsprofilen heraus, sodaß eine seitliche Verriegelung der Frachtcontainer-Systeme bzw. Sitzpaletten in ihrem unteren Randbereich erfolgen kann. Auch bei dieser Vorrichtung ist nachteiligerweise eine in Z-Richtung des Flugzeuges platzsparende Anordnung nicht möglich.

Der Erfindung liegt daher die Aufgabe zugrunde, eine Vorrichtung der eingangs genannten Art zu schaffen, durch die eine wesentliche Gewichtsersparnis und eine Erhöhung der Kabinenhöhe gewährleistet ist.

Die Aufgabe wird erfindungsgemäß dadurch gelöst, daß sich die Abstände der U-förmigen Längsprofile zueinander durch an den LD-Frachtcontainer-Systemen bzw. Sitzpaletten befestigbare Teilelemente der Verriegelungselemente ergeben, daß die Verbindungsstege der Längsprofile auf ihren Innenflächen Sitzschienenrasterelemente aufweisen, und daß Adapter zwischen den Verriegelungselementen und den Sitzschienenrasterelementen zur mechanischen Befestigung der LD-Frachtcontainer-Systeme bzw. Sitzpaletten an den Sitzschienenrasterelementen angeordnet sind.

Gegenüber den herkömmlichen Flugzeugen liegt ein Vorteil der Erfindung darin, daß in der Passagiervariante lediglich 1 Zoll an Kabinenhöhe verloren geht sowie daß in der Frachtvariante überhaupt kein Verlust an Kabinenhöhe vorhanden ist. Der Ersatz der bisher verwendeten Längsträger, nämlich der bisher verwandten Sitzschienen, durch die als Rollenbahnen anzusehenden U-förmigen Profile bringt vorteilhafterweise mit sich, daß bereits existierende Sitzpaletten lediglich angepaßt werden müssen und somit in der Passagierversion flexibel auf unterschiedliche Kundenwünsche reagiert werden kann.

Ausgestaltungen der Erfindung sind in den Unteransprüchen 2 bis 6 beschrieben.

In der Zeichnung ist ein Ausführungsbeispiel der Erfindung in zwei Teildarstellungen schematisch dargestellt, und zwar zeigen:
- Fig. 1: einen Ausschnitt einer Vorrichtung mit einem Verriegelungselement und
- Fig. 2: einen Vorrichtungsausschnitt mit einer Transportrolle mit zugehörigem Befestigungselement.

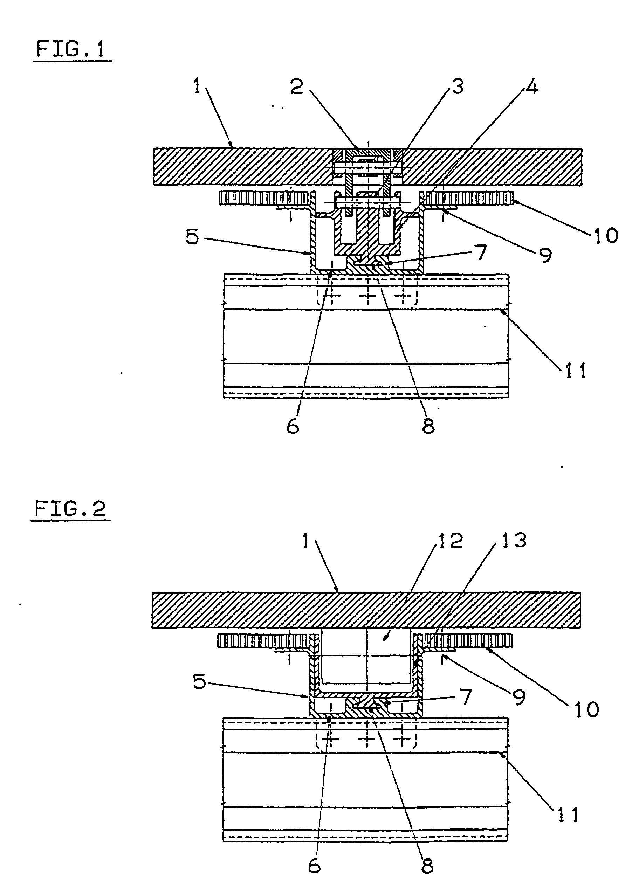

In den Figuren 1 und 2 ist jeweils eine Palette, die beispielsweise mit zeichnerisch nicht dargestellten Sitzen bestückt sein kann (Sitzpalette), mit 1 bezeichne Anstelle der Palette 1 kann auch der Bodenbereich eines LD-Frachtcontainers verwendet werden. In einem zeichnerisch nicht dargestellten Flugzeug sind U-förmige Längsprofile 5 zur ortsfesten Aufnahme von Verriegelungselementen 2, Transportrol-12 bzw. Kugelelementen auf den Querträgern 11 eines Fußbodenrostes in vorgegebenen Abständen zueinander befestigt. Diese Abstände ergeben sich durch die an den Sitzpaletten 1 angeordneten Teilelemente der Verriegelungselemente 2. In dem Längsprofil 5 ist entweder mindestens ein Verriegelungselement 2 angeordnet (vgl. Fig. 1) oder das Längsprofil 5 weist mehrere Transportrolle 12 auf, von denen nur eine dargestellt ist (vgl. Fig. 2).

Gemäß Fig. 1 steht das Verriegelungselement 2 über eine Bolzenverbindung 3 mit einem Adapter 4 in mechanischer Verbindung. Das Verriegelungselement 2 und der Adapter 4 greifen in den Innenraum des U-förmigen Längsprofils 5 ein, dessen Verbindungssteg 6 auf seiner Innenfläche ein Sitzschienenrasterelement 7 aufweist. An dem Sitzschienenrasterelement 7 ist der Adapter 4 mechanisch befestigt, beispielsweise mittels einer Nut- und Federverbindung 8. Bei dem Sitzschienenrastereiement 7 kann es sich um eine allgemein bekannte, im Bodenbereich eines Flugzeuges angeordnete Sitzschiene mit T-förmiger Nut handeln. Im Bereich der Begrenzungsstege der T-förmigen Nut sind in einem vorgegebenen Raster Aufnahmeerweiterungen vorgesehen, die die Begrenzungsstege durchdringen. Die Abmessungen der Aufnahmeerweiterungen sind derart gewählt, daß die Federelemente der Adapter 4 bzw. der U-förmigen Befestigungselemente 13 in die Nut des Sitzschienenrasterelementes 7 eingeführt werden können. Anschließend erfolgt eine Verschiebung der Federelemente in der Nut zur Herstellung der Nut- und Federverbindung 8.

Das U-förmige Längsprofil 5, das an seiner Außenfläche mit Befestigungselementen 9 zur Aufnahme von Fußbodenplatten 10 versehen ist, befindet sich in mechanisch fester Verbindung auf einem oder mehreren Querträgern 11 eines zeichnerisch nicht dargestellten Fußbodengerüstes in einem Flugzeug. Die Anordnung von mehreren Längsprofilen 5 auf mehreren Querträgern 11 erfolgt vorzugsweise unter einem Winkel von 90°, wobei der Abstand von den Längsprofilen 5 zueinander durch die an den Containern oder Paletten 1 befestigten Verriegelungselemente 2 oder die aus Fig. 2 ersichtlichen Transportrollen 12 vorgegeben ist.

Gemäß Fig. 2 sind die Transportrollen 12 mittels U-förmiger Befestigungselemente 13 in den U-förmigen Längsprofilen 5 in durch die Abmessungen der Sitzpalette 1 bestimmten Abständen in Längsrichtung derart befestigt, daß die Transportrollen 12 aus den Profilen 5 herausragen. Vorzugsweise erfolgt eine Befestigung der Befestigungselemente 13 auf Sitzschienenrasterelementen 7, beispielsweise über eine Nut- und Federverbindung 8.

### Bezugszeichenliste

- 1: Palette mit Sitzen (Sitzpalette) / LD-Frachtcontainer
- 2: Verriegelungselement
- 3: Bolzenverbindung
- 4: Adapter
- 5: U-förmiges Längsprofil
- 6: Verbindungssteg des Profils 5
- 7: Sitzschienenrasterelement
- 8: Nut- und Federverbindung
- 9: Befestigungselement
- 10: Fußbodenplatte
- 11: Querträger
- 12: Transportrolle
- 13: U-förmiges Befestigungselement für Transportrolle 12

## Patentansprüche

1. Vorrichtung zum Transport und zur Befestigung von im Einsatz befindlichen LD-Frachtcontainer-Systemen oder von vorzugsweise mit Sitzen ausgerüsteten Paletten (1), sogenannte Sitzpaletten, auf den Querträgern (11) eines Fußbodenrostes in einem Flugzeug mit im Bodenbereich des Flugzeuges befestigbaren Verriegelungselementen (2), Transportrollen (12) bzw. Kugelelementen, mit U-förmigen Längsprofilen (5) zur Aufnahme der Verriegelungselemente (2), Transportrollen (12) bzw. Kugelelemente, wobei die U-förmigen. Längsprofile (5) auf den Querträgern (11) des Fußbodenrostes in vorgegebenen Abständen zueinander befestigbar sind, und mit innerhalb der U-förmigen Längsprofile (5) befestigten Transportrollen (12) bzw. Kugelelementen, die aus den U-förmigen Längsprofilen (5) herausragen und die in durch die LD-Frachtcontainer-Systeme bzw. Sitzpaletten (1) bestimmten Abständen in Längsrichtung der Längsprofile (5) angeordnet sind, **dadurch gekennzeichnet, daß** sich die Abstände der U-förmigen Längsprofile (5) zueinander durch an den LD-Frachtcontainer-Systemen bzw. Sitzpaletten (1) befestigbare Teilelemente der Verriegelungselemente (2) ergeben, daß die Verbindungsstege (6) der Längsprofile (5) auf ihren Innenflächen Sitzschienenrasterelemente (7) aufweisen, und daß Adapter (4) zwischen den Verriegelungselementen (2) und den Sitzschienenrasterelementen (7) zur mechanischen Befestigung der LD-Frachtcontainer-Systeme bzw. Sitzpaletten (1) an den Sitzschienenrasterelementen (7) angeordnet sind.

2. Vorrichtung nach Anspruch 1, **gekennzeichnet durch** Bolzenverbindungen (3) zwischen den Verriegelungselementen (2) und den Adaptern (4).

3. Vorrichtung nach Anspruch 1, **dadurch gekennzeichnet, daß** die Transportrollen (12) mittels U-förmiger Befestigungselemente (13) an den Sitzschienenrasterelementen (7) der Längsprofile (5) mechanisch befestigt sind.

4. Vorrichtung nach Anspruch 1, 2 oder 3, **gekennzeichnet durch** Nut- und Federverbindungen (8) zwischen den Sitzschienenrasterelementen (7) und den Adaptern (4) bzw. den U-förmigen Befestigungselementen (13) für die Transportrollen (12).

5. Vorrichtung nach Anspruch 1 oder 3, **dadurch gekennzeichnet, daß** an den Außenflächen der U-förmigen Profile (5) Befestigungselemente (9) zur Aufnahme von Fußbodenplatten (10) angeordnet sind.

6. Vorrichtung nach einem der Ansprüche 1, 3 oder 5, **dadurch gekennzeichnet, daß** die U-förmigen Profile (5) unter einem Winkel von annähernd 90° auf den Querträgern (11) des Fußrostes befestigt sind.

## Claims

1. Device for transporting and fastening LD freight-container systems which are in service or pallets (1) preferably equipped with seats, so-called "seat pallets", on the transverse girders (11) of a floor grating in an aircraft, the said device having locking elements (2), transporting rollers (12) or spherical elements which can be fastened in the floor region of the aircraft; having U-shaped longitudinal profiles (5) for receiving the locking elements (2), transporting rollers (12) or spherical elements, it being possible to fasten the U-shaped longitudinal profiles (5) on the transverse girders (11) of the floor grating at predetermined intervals from one another; and having transporting rollers (12) or spherical elements which are fastened inside the U-shaped longitudinal profiles (5) and protrude out of the latter and which are disposed at intervals, which are determined by the LD freight-container systems or seat pallets (1), in the longitudinal direction of the longitudinal profiles (5), **characterised in that** the intervals of the U-shaped longitudinal profiles (5) from one another are brought about by partial elements of the locking elements (2) that can be fastened to the LD freight-container systems or seat pallets (1) ; that the connecting webs (6) of the longitudinal profiles (5) have seat-rail grid elements (7) on their inner faces; and that adapters (4) are disposed between the locking elements (2) and the seat-rail grid elements (7) for mechanically fastening the LD freight-container systems or seat pallets (1) to the said seat-rail grid elements (7).

2. Device according to claim 1, **characterised by** stud-type connections (3) between the locking elements (2) and the adapters (4).

3. Device according to claim 1, **characterised in that** the transporting rollers (12) are fastened mechanically to the seat-rail grid elements (7) of the longitudinal profiles (5) by means of U-shaped fastening elements (13).

4. Device according to claim 1, 2 or 3, **characterised by** groove-and-tongue connections (8) between the seat-rail grid elements (7) and the adapters (4) or the U-shaped fastening elements (13) for the transporting rollers (12).

5. Device according to claim 1 or 3, **characterised in that** fastening elements (9) for receiving floor panels (10) are disposed on the outer faces of the U-shaped profiles (5).

6. Device according to one of claims 1, 3 or 5, **characterised in that** the U-shaped profiles (5) are fastened on the transverse girders (11) of the foot grating at an angle of approximately 90°.

## Revendications

1. Dispositif pour déplacer et fixer des systèmes de conteneurs longue distance ou des palettes (1) de préférence équipées de sièges, encore appelées 'palettes à sièges', sur les supports transversaux (11) d'une grille de plancher d'aéronef, à l'aide d'éléments de verrouillage (2) pouvant être fixés dans la zone de plancher de l'aéronef et de galets de roulement (12) ou éléments sphériques, les profilés longitudinaux (5) en forme de U situés sur les supports transversaux (11) de la grille de plancher pouvant être fixés les uns par rapport aux autres à des distances prédéfinies et à l'aide de galets de roulement (12) ou éléments sphériques fixés à l'intérieur des profilés longitudinaux en forme de U (5), faisant saillie par rapport aux dits profilés longitudinaux (5) et disposés dans le sens longitudinal des profilés longitudinaux (5), à des intervalles déterminés par les systèmes de conteneurs de fret long courrier ou par les palettes à sièges (1), et **caractérisé en ce que** la distance entre les différents profilés longitudinaux en forme de U est déterminée par des éléments partiels des éléments de verrouillage (2) pouvant être fixés contre les systèmes de conteneurs de fret long courrier ou les palettes à sièges (1), **en ce que** les traverses de raccordement (6) des profilés longitudinaux (5) présentent, sur leurs surfaces internes, des éléments d'engrènement à rails de siège (7), et **en ce que** les adaptateurs (4) ont été disposés entre les éléments de verrouillage (2) et les éléments d'engrènement à rails de siège (7) en vue de la fixation mécanique des systèmes de conteneurs de fret long courrier ou des palettes à sièges contre les éléments d'engrènement à rails de siège (7).

2. Dispositif selon la revendication 1, **caractérisé par** des raccordements par boulons (3) entre les éléments de verrouillage (2) et les adaptateurs (4).

3. Dispositif selon la revendication 1, **caractérisé en ce que** les galets de roulement (12) sont fixés mécaniquement contre les éléments d'engrènement à rails de siège (7) des profilés longitudinaux (5), à l'aide d'éléments de fixation en forme de U (13).

4. Dispositif selon la revendication 1, 2 ou 3, **caractérisé par** des raccordements à encoche ou ressort (8) entre les éléments d'engrènement à rails de siège (7) et les adaptateurs ou les éléments de fixation en forme de U (13) destinés aux galets de roulement (12).

5. Dispositif selon la revendication 1 ou 3, **caractérisé en ce que** des éléments de fixation (9) destinés à recevoir des plaques de plancher (10) ont été disposés sur les surfaces externes des profilés en forme de U (5).

6. Dispositif selon une des revendications 1, 3 ou 5, **caractérisé en ce que** les profilés en forme de U (5) ont été fixés sur les supports longitudinaux (11) de la grille de plancher, dans un angle d'environ 90°.
